# EUROPEAN PATENT APPLICATION

(11) **EP 3 616 533 A1**
(43) Date of publication of application: **04.03.2020**
(21) Application number: 19193704.4
(22) Date of filing: 27.08.2019
(51) Int. Cl.: A23L 33/105, A23L 2/52, A23L 2/56, A23L 2/58, A23L 2/60, A23L 2/68

(54) **NATURAL BEVERAGE COMPOSITION CONTAINING ARQIAT EXTRACT FREE FROM CAFFEINE AND PHOSPHORIC ACID**

(30) Priority: 27.08.2018 PK 5952018
(71) Applicant: Qarshi Brands (SMC) (Pvt) Ltd., Lahore (PK)
(72) Inventor: QARSHI, Iqbal Ahmed, Lahore (PK); JANJUA, Khalid Mehmood, Lahore (PK)
(74) Representative: Simmons & Simmons

(57) **Abstract**

The present invention provides a novel herbal based beverage composition comprising a herbal distillates (Arqiat) extracted from natural herbs like rose, sandal, khas and ushna, water, at least one sweetener, at least one acidulant, a colorant, a preservative, a stabilizing agent and a flavoring agent, wherein the beverage composition is free from caffeine and phosphoric acid. The invention further provides a method for preparing the natural beverage composition comprising the steps of: dissolving the sugar in herbal distillates (Arqiat) extract of herbs (rose, sandal, khas and ushna) with acidity regulator (buffer) and preservative; heating and stirring the mixture to dissolve all the ingredients until the temperature reaches in range of 70 °C to 75 °C, transferring the syrup into the cooking pans and cooked it at boiling to adjust the Bricks. Stop heating when boil and add sweetener and color in the syrup followed by filtering and cooling the syrup. Dilute the unflavored syrup with treated water to make the finish syrup up to volume and add flavor and stabilizer in the prepared syrup and testing the resultant beverage for pH, Brix and acidity tests, and filling the prepared beverage into the final container through carbo cooler.

## Description

### FIELD OF THE INVENTION

The present invention relates to a herbal beverage composition comprising herbal distillate (Arqiat) which is extract of natural herbs like rose, sandal, khas and ushna with additional natural ingredients and flavoring agents, free from caffeine and phosphoric acid. The resulting beverage of invention has an unexpected refreshing taste which containing various flavors and it is suitable for health as having nutritive value containing natural ingredients.

### BACKGROUND OF THE INVENTION

There is a substantial need to substitute the existing beverages with products comprising natural ingredients, free from caffeine and phosphoric acid as these ingredients causes serious adverse effects on the health.

For example, the famous cola beverages are sweetened carbonated soft drinks, made from ingredients containing caffeine from the kola nut and non-cocaine derivatives from coca leaves, flavored with vanilla and other ingredients. In general, cola products contain water, carbon dioxide, a sweetener, phosphoric acid, caffeine and cola flavor.

There is no cola product which is free from phosphoric acid and/or caffeine. However, there are some cola products which are either caffeine free like Coca Cola® caffeine free or phosphoric acid free like SYFO® beverages and Red Bull®, but there is not a single product available, particularly natural beverage that would be free from both caffeine and phosphoric acid.

Although these cola beverages are on sale since 19^{th} century but the excessive usage of these beverages started in the recent years in all age groups but particularly much by children and young generation that has drawn attention on the hazards of excess usage of caffeine and phosphoric acid.

Phosphoric acid is a popular soda ingredient in the beverage. It helps to preserve the integrity of the soda's recipe blend minimizing bacteria. It is used to give cola a sharper flavor and keep the bubbles from becoming flat. However, the phosphoric acid has the following adverse effects on the human body:
- Dissolve teeth enamel and causes tooth decay.
- Excess quantity of phosphorus can reduce the calcium in the body which subsequently effect on bone growth and bone loss.
- Lowers bone density-BMD (Journal of Clinical Nutrition 2006)
- Triggers major kidney issues, stone forming process increases due to excess phosphorous (Journal of Epidemiology 2007)
- Decreases nutrients in the body and can impair the body such as utilization of vital nutrients like iron, magnesium and zinc can adversely produce an impact on the health.
- Increases the body acidity due acidic in nature.
- Damage tissues.

In addition to the above, the phosphoric acid is used for rust removal of metals, refining purposes, in the manufacturing of fertilizer, as a disinfectant and detergent. Therefore, it could be well imagine the s destructive nature effect on the human body from its above uses.

Caffeine has also been used in medicine as have various pharmacological and synergistic effects in combination with other medicines. Caffeine use in excess can produce following adverse effects on the human body:
- Dehydration
- Hypertension and heart attacks
- Insomnia, nervousness and restlessness.
- Stomach irritation, nausea and vomiting
- Increased heart beat
- Respiratory and other side effects such as lean to the kidney stone formation.

In view of the adverse effects of excessive consumption of caffeine and phosphoric acid in Colas on the human body, there is excessive need to produce the alternate beverage comprising natural herbal ingredients with good taste and flavor and free from both caffeine and phosphoric acid.

### SUMMARY OF THE INVENTION

It is, therefore, an object of the present invention to provide a beverage composition free from caffeine and phosphoric acid in order to eliminate the health damaging effects of these ingredients as available in the various existing cola beverages. The beverage composition of present invention may comprise:
- a herbal distillates (Arqiat)extract of natural herbs like rose, sandal, khas and ushna,
- water,
- at least one sweetener,
- at least one acidulant,
- at least a colorant,
- at least a preservative,
- at least an stabilizing agent,
   and any suitable flavor.
wherein the beverage contains no caffeine and no phosphoric acid.

It is another object of this invention to provide a novel palatable herbal distillates (Arqiat)-containing natural beverage composition as an alternate to the existing cola beverages.

It is a further object of the present invention to provide a method for preparing the natural beverage composition comprising:
- dissolving the sugar in herbal distillates (Arqiat) extract with acidity regulator,
- heating and stirring the mixture to dissolve all the ingredients until the temperature reaches in range of 70 °C to 75 °C,
- stop stirring when the temperature reaches in range of 70 °C to 75 °C,
- transfer the syrup into the cooking pans and cooked it at boiling to adjust the Bricks,
- stop heating when boil and add sweetener and color in the syrup,
- filter and cool the syrup,
- dilute the unflavored syrup with treated water to make the finish syrup up to volume.
- add flavor and stabilizer in the prepared syrup, and
- check the pH, Brix and acidity of the prepared mother syrup and fill the prepared beverage into the final container through carbo cooler.

### DETAILED DESCRIPTION OF THE ILLUSTRATED EMBODIMENTS

Hereinafter, preferred embodiments of the present invention will be described in detail. The aspects and features of the present invention and methods for achieving the aspects and features will be apparent by referring to exemplary embodiments to be described in detail. However, the present invention is not limited to the exemplary embodiments disclosed hereinafter, but can be implemented in various forms. The matters defined in the description, such as the detailed construction and elements, are nothing but specific details provided to assist those of ordinary skill in the art in a comprehensive understanding of the invention, and the exemplary embodiments are only defined within the scope of the appended claims. Accordingly, the exemplary embodiments of the present invention are not limited to their specified form as illustrated, but include changes in form being produced according to manufacturing processes.

The novel beverage of present invention comprising an herbal distillates (Arqiat) extract of natural herbs like rose, sandal, khas and ushna. The physicochemical properties of each herb/ natural ingredients including pharmacological effects and uses are described in detail herein below.

### ROSE

The essential oil of rose is extracted by steam distillation of fresh Damascus Rose (Rosa Damascena, as it is known among botanists) and is composed of hundreds of components, out of which the major contributors are citronellol, citral, carvone, citronellyl acetate, eugenol, ethanol, farnesol, stearpoten, methyl eugenol, nerol, nonanol, nonanal, phenylacetaldehyde, phenylmethyl acetate, and phenyl geraniol. Damascus Roses are the preferred variety because they are the most fragrant species and are believed to be the original red roses with the strongest aroma and highest oil content.

Rose water comes from the Rosa damascene, a species of the Rosaceae plant, a well-known ornamental plant that's called the king of flowers. The extract of the damask rose isn't just for perfuming. The plant contains several components such as terpenes, glycosides, flavonoids and anthocyanins that have beneficial effects on health.

Rosa damascene is used for rose water and rose essential oil. It's believed to have numerous medicinal benefits and has been used as an analgesic, bronchodilator, anti-convulsive, antimicrobial and as an anti-inflammatory.

It's also been used as cough syrup, to treat reflux, as a laxative, and to reduce blood sugar. The oil is said to treat depression, grief and stress. It also may have benefits for wound healing, allergies, skin conditions and headaches. "Rose water also contains various vitamins: A, C, E, and B and it's especially great for depression as well as for those with sore throats."

### Health Benefits of Rose Essential Oil:

Some of the medicinal and health benefits of rose essential oil below.

### Fights Depression

As an antidepressant, rose oil can be given to patients with acute depression or those undergoing rehabilitation to bring positivity into their lives.

### Sedates Inflammation

Rose essential oil may calm down a patient with high fever by sedating the inflammation. It can also be beneficial in other cases of inflammation caused by microbial infection, ingestion of poisonous materials, indigestion, and dehydration.

### Treats Wounds

Topically applying rose oil to wounds helps to protect them from becoming septic and developing infections.

### Antispasmodic Properties

Rose essential oil efficiently relieves spasms in the respiratory system and intestines, as well as muscular spasms in various limbs. It also helps cure convulsions, muscle pulls, cramps and spasmodic cholera caused due to spasms.

### Protects Against Viruses

Getting protected from viruses, the solution to this is to use an antiviral agent that behaves as a shield against any type of virus. Rose essential oil is one such shield, and studies have shown that it protects against many types of infections.

### Aphrodisiac

From Cupid himself to modern day high-tech lovers, everyone knows how indispensable roses are in the romantic department. The basic element is the essential oil of the flower. The very scent of it can arouse you, and it boosts the libido while invoking romantic feelings which are essential for a successful sex life. This can reduce symptoms of sexual dysfunction, erectile dysfunction, frigidity, and general disinterest in sexual activity with partners.

### Astringent Properties

The astringent property of rose oil has many benefits. It strengthens gums and hair roots while toning and lifting skin and contracting muscles, intestines, and blood vessels. It protects against the untimely loss of teeth and hair, development of wrinkles, the loss of firmness of intestines and muscles of the abdominal area and limbs associated with aging. Above all, rose essential oil helps stop the flow of blood from wounds and cuts by contracting the blood vessels. This astringent property can also cure certain types of diarrhea.

### Eliminates Bacteria

It is a good bactericide. It can be used in the treatment of typhoid, diarrhea, cholera, food poisoning, like those in the colon, stomach, intestines, and urinary tract, as well as external infections on the skin, ears, eyes, and wounds.

### Skin Care

This property of rose essential oil can be of great interest for those who care a lot about their looks. It makes the scars and after marks of boils, acne, and the pox on the skin fade quickly. This includes the fading of stretch marks, surgery scars, and fat cracks associated with pregnancy and delivery. Much of this is due to the antioxidant activity of rose essential oil, which spurs on the healing processes of the skin.

### Purifies the Blood

Rose essential oil purifies the blood by helping in the removal and neutralization of toxins. Once your blood is purified and free of toxins, you are protected from boils, rashes, ulcers, and skin diseases, as well as serious conditions that free radicals can cause, like cancer and heart diseases.

### Eases Menstruation

It stimulates the hormone secretions which trigger menstruation. It is particularly effective for those suffering from obstructed and irregular menses. It also eases cramps, nausea, and fatigue while reducing the pain associated with menstruation and post-menopausal syndrome.

### Prevents Excessive Bleeding

This property of the essential oil of rose can be very useful for people suffering from hemorrhaging (bleeding, external or internal) after an injury or surgery. This speeds up clotting and coagulation of blood and stops excessive bleeding.

### Maintains Liver Health

Rose essential oil is good for the health of your liver. It keeps it strong, properly functioning, and protected from infections. It also treats problems like the excess flow of bile, acids, and ulcers.

### Prevents Toxicity

There cannot be a laxative with a better scent than this, which is an ironic benefit for a laxative. It can serve as a harmless and effective laxative with a beautiful smell causing no adverse side effects. It also influences the intestinal and anal muscles to help clear bowels. This helps in losing weight and preventing excessive toxicity in the body.

### Relieves Anxiety

Rose essential oil acts as a tonic for the nerves. It gives them the strength to bear shock and protects them from disorders resulting from age and injuries.

Many cultures today still use rose water-infused food and drink to sooth and cool down a cranky toddler or anyone uncomfortable in the summer heat.
- drink rose water to hydrate the skin from the inside. Well-hydrated skin looks and feels plump and healthy.
- drink rose water, said to have anti-aging properties, to help with skin aging by reducing wrinkles, lightening dark spots and tightening pores.
- drink rose water as a mood enhancer, to relieve depression or stress and improve mood.
- drink rose water to relieve digestion troubles like bloating, upset tummy and constipation.
- drink rose water to help heal from colds, flu and sore throats. It may have a bronchodilator effect and help with respiratory illness.
- drink rose water to calm nerves when feeling frazzled.
- drink rose water to relieve fluid retention and inflammation.

### SANDAL

Sandalwood is a class of woods from trees in the genus Santalum. The woods are heavy, yellow, and fine-grained, and unlike many other aromatic woods, they retain their fragrance for decades. Sandalwood oil is extracted from the woods for use. The essential oil of sandalwood is extracted through steam distillation of wood from matured sandalwood trees which are 40-80 years old, although 80 years is preferred. The older the tree, better the oil reserve and stronger the aroma.

Sandalwood oil has many traditional uses. For centuries, East Indian sandalwood oil has been a popular ingredient in Ayurvedic medicine, the folk medicine of India. It's also been used in traditional Chinese medicine (TCM).

Sandalwood oil has been used to manage:
- the common cold
- urinary tract infections
- liver and gallbladder problems
- digestive problems
- muscle problems
- mental disorders
- hemorrhoids
- scabies

### Health Benefits of Sandalwood Oil

Sandalwood oil is used in medicines, skin and beauty treatments, and numerous industrial products including mouth fresheners, edibles, incense sticks, room fresheners, deodorants, perfumes, soaps, lotions, and creams.

### Antiseptic

The essential oil of sandalwood is very good as an antiseptic agent. It is safe for both internal and external applications. When ingested, it helps protect internal wounds and ulcers from infections. Similarly, when applied to the skin, protect wounds, sores, boils, and pimples from developing infections or from becoming septic.

### Anti-inflammatory

Essential oil is very effective as anti-inflammatory agents. They have a nice cooling effect and they provide relief from all types of inflammation in the brain, digestive, nervous, circulatory, and excretory systems that result from infections, fever, side effects of antibiotics, poisoning, insect bites, or wounds.

### Antispasmodic

Being a relaxant and sedative in nature, this oil works great against spasms. It relaxes nerves, muscles and blood vessels, thereby ending spasms and contractions. Thus, it is helpful in treating problems associated with them such as cramps, aches, and coughs.

### Astringent

Although it is very mild, this essential oil has some astringent properties which induce contractions in the gums, muscles, and skin. This proves beneficial in terms of strengthening the hold of gums on the teeth, the strengthening of muscles, and tightening of the skin.

### Cicatrisant

The essential oil of sandalwood soothes the skin and helps scars and spots to heal much faster. It is an old practice to use the paste of sandalwood as a skin pack. The same effect can be obtained by using this essential oil. This oil is now extensively used in skin care soaps, lotions, and creams.

### Carminative

The essential oil of sandalwood, being relaxant in nature, induces relaxation in the intestines and abdominal muscles, thereby facilitating the removal of gases. Also, it prevents excess gases from forming.

### Diuretic

Due to its relaxing and anti-inflammatory properties, it soothes inflammation in the urinary system and induces relaxation, thereby promoting the easy passage of urine. It also increases the frequency of urination and the volume of urine. This helps in treating infections and inflammation in the urinary system because it flushes out dangerous toxins through the urine.

### Disinfectant

It is the disinfectant property of sandalwood essential oil that justifies its wide use in religious ceremonies and cosmetics. Its fragrance keeps away microbes and small insects, which is why it is extensively used in incense sticks, sprays, fumigants, and evaporators to disinfect large areas. Moreover, this oil can be mixed with bathing water or other lotions or oils to apply on the skin and wounds to ensure their protection from infections. This oil can also be safely taken with milk to cure internal infections, such as those of the throat, esophagus, stomach, intestines, and excretory tracts.

### Skin Care

Sandalwood oil soothes the skin, relieves it from inflammation and irritation, cures infections and keeps you feeling fresh and cool.

### Treats Coughs

Sandalwood essential oil behaves as an expectorant and is particularly effective in treating coughs. It also fights the viral infections which initially caused the cold, cough, flu, mumps, or any other illness.

### Antiphlogistic

As mentioned above, sandalwood oil has antiphlogistic properties and gives relief from inflammation resulting from fever and viral infections.

### Lowers Blood Pressure

This is a very useful property of sandalwood essential oil. It can be taken with milk or even water to reduce blood pressure in patients suffering from hypertension. The paste of sandalwood has the same effect when topically applied to various parts of the body.

### Memory Booster

It improves memory and stimulates your concentration power. It also keeps the brain cool and relaxed and saves you from undue stress and anxiety.

### Sedative Effect

This oil sedates inflammation, anxiety, fear, stress, and restlessness. Furthermore, it induces relaxation, calmness, concentration, inner vision, and positive thoughts.

### Health Tonic

This oil can be a very good health tonic for anyone, especially for growing children. Since it is soothing to the stomach and the digestive, circulatory and nervous systems, it helps these systems function in harmony and without any abnormalities.

### PARMELIA PERLATA (USHNA)

Plant Description: Stone plant is small shrub that normally grows on the rocks and sometimes looks like a combination of algae and fungus. The upper layer of leaves is green-black and whitish from inside. They also grow on trees gaining nutrition from rain running down the tree.

There are various species of lichens found variable shapes like tubular, upright, branching, and flat and leaf like.

### Parts Used: Whole plant

Constituents: Stone plant contains lecanoric acid and alkaloid called atranorin.

### Uses:

- Lichens are used as fodder in Indian states and also have various culinary uses.
- It is thought to be a good pain reliever and used as a remedy to heal wounds.
- It also cures various skin disorders. It acts as anti-fungal, anti-biotic, expectorant, astringent and anti-viral.

It is a lichen growing in rosettes or irregularly spreading over the substratum giving the appearance of a flower - hence the name. It is mainly composed of fungal mycelia which form a network enclosing algal cells or gonidia. The plant is astringent, bitter, acrid, cooling, anti-inflammatory and aphrodisiac. It is useful in sores, boils, inflammations, seminal weakness and amenorrhea.

It is helpful in relieving from pain when applied on head. It also helps in itching and skin related problems. It helps in reducing any kind of inflammation in the body. It shows antibacterial activity and is fairly effective against Protozoans. Its decoction is given for laryngitis. It helps against boldness, period aches, worms and lice.

The plant has astringent, bitter, acrid, cooling, anti-inflammatory and aphrodisiac properties.

### Therapeutic constituents:

Usnic acid is the key active component of Stone Flowers, which have antimicrobial and antifungal properties.

### Key therapeutic benefits:

Stone flowers are an important ingredient in herbal compositions for the treatment of seminal weakness and male sexual debility.

It is also administered in fungal infections in women, like vaginal candidiasis.

Used in Confido, Speman, V-Gel, Speman Vet.

### CHRYSOPOGON ZIZANIOIDES (KHASS)

A tropical grass about 2 - 5 m high, Vetiver (Chrysopogon zizanioides) is characterized by its extensive root system that tends to grow deep up to 4 m or more. Because of such characteristic, it is commonly planted to prevent soil erosion in sloping areas. The root yields high quality, woody, and heavy-scented essential oil which is used as a flavoring in canned asparagus and peas, fruit drinks, syrup sweets, etc. It is also used in making soaps, perfumery, cosmetics, deodorants, and other toiletries. The roots are used to make baskets, fans, mats, and cooling screens.

Powdered roots show insecticidal properties.

It is used in certain canned foods, such as asparagus and peas, to reinforce the natural odour and taste.

The essential oil obtained from the roots is used medicinally as a carminative, diaphoretic, diuretic, emmenagogue, refrigerant, stomachic, and tonic, antispasmodic and sudorific. A stimulant drink is made from fresh rhizomes. The plants are used as an anthelmintic.

### USES:

### Food and Flavorings

Vetiver (Khass) is used as a flavoring agent, usually through khass syrup. Khass syrup is made by adding khass essence to sugar, water and citric acid syrup. Khass essence is dark green thick syrup made from the roots of khass grass (vetiver grass). It has a woody taste and a scent characteristic of khass.

The syrup is used to flavor milkshakes and yogurt drinks like lassi, but can also be used in ice creams, mixed beverages like Shirley Temples and as a dessert topping. Khass syrup does not need to be refrigerated, although khass flavored products may need to be.

### In-house use

In the Indian Subcontinent, khass (vetiver roots) is often used to replace the straw or wood shaving pads in evaporative coolers. When cool water runs for months over wood shavings in evaporative cooler padding, they tend to accumulate algae, bacteria and other microorganisms. This causes the cooler to emit a fishy or seaweed smell into the house. Vetiver root padding counteracts this smell. A cheaper alternative is to add vetiver cooler perfume or even pure khass attar to the tank. Another advantage is that they do not catch fire as easily as dry wood shavings.

Mats made by weaving vetiver roots and binding them with ropes or cords are used in India to cool rooms in a house during summer. The mats are typically hung in a doorway and kept moist by spraying with water periodically; they cool the passing air, as well as emitting a refreshing aroma.

In the hot summer months in India, sometimes a muslin sachet of vetiver roots is tossed into the earthen pot that keeps a household's drinking water cool. Like a bouquet garni, the bundle lends distinctive flavor and aroma to the water. Khass-scented syrups are also sold.

### Essential Oil - Process Using Water Vapor

Essential oils of the above herbs can be produced by use of water vapor. The term 'oil' refers to their lipophilic nature, which causes them to separate from aqueous distillate. The adjective 'essential' refers to its origin in a living plant.

### Steam distillation

This process, which is an indirect distillation, involves putting raw materials above the vapour current without previous maceration. The saturated vapors bearing volatile organic compounds are condensed on a cold surface, and the essential oil is recovered by decantation. This process allows treatment of raw materials that are heat-sensitive.

### Hydro distillation

In this case, the raw materials are immersed in boiling water. The volatile compounds are carried away with the water vapor and collected after condensation and decantation, as in steam distillation. Hydro distillation is generally carried out at atmospheric pressure. Nevertheless, we can improve the relationship between the weight of material carried and that of evaporated water, which represents an improvement in energetic efficiency. Such material as vetiver rhizome can be treated with this technique, because it bears many compounds of high molecular mass, which cannot be evaporated easily at atmospheric pressure.

### Microwave hydro distillation

Recently, a microwave technique has been developed for treating aromatic plants. The advantage of this technique is that it allows the recovery of odorant compounds present in smaller quantities in plants. In addition, the time of extraction is very short in comparison with traditional steam distillation. However, it seems as if this method will not be commercially available because of difficulties in the choice of microwave frequency.

### Hydro diffusion

In contrast to the usual direct steam distillation, this process allows steam to enter from the top of the vessel. The resulting solution is condensed and separated by decantation, as mentioned above. The main advantages of this technique are in saving energy owing to reduced steam consumption and in the elimination of hydrolysis, because the raw material is never in contact with water, only with steam.

### Vacuum distillation

In many cases, the essential oils produced either by solvent extraction (see below) or by steam distillation do not exactly fit the perfumers' and the flavorists' needs. It is sometimes necessary to eliminate certain constituents, such as terpenes or heavy colorings, or to increase the percentage of major aroma compounds. A distillation column on which different compounds can be separated according to their boiling points. The temperature gradually increases during the distillation, the most volatile compounds being isolated first. The better the vacuum, the lower the distillation temperature, which in turn protects the odorants from degradation.

In view of the forgoing benefits on the human body, the beverage of present invention comprising herbal distillates (Arqiat) extract of natural herbs like rose, sandal, khas and ushna is a perfect choice as a refreshing and a healthier drink.

According to another preferred embodiment of the present invention the beverage can vary to a certain extent depending upon such factors as the product's intended market segment, its desired nutritional characteristics, flavor profile, and the like. It will generally be an option to add further ingredients to the product to a particular beverage embodiment. Additional sweeteners may be added, flavoring electrolytes, vitamins, fruit juices or other fruit products, tastents, masking agents and the like, flavor enhancers, and/or carbonation typically can be added to vary the taste, mouth feel, nutritional characteristics, etc. preservatives can be added if desired, depending upon the other ingredients, production techniques, desired shelf life. Carbon Dioxide typically is added for effervescence.

According to another preferred embodiment of the present invention the beverage may also contain, including without limitation vitamins, natural buffering agent e.g. the sodium and potassium salts of citric, tartaric and lactic acids, natural preservatives, natural salts, thickness and stabilizing agents.

According to another preferred embodiment of the present invention the beverage includes ready to drink composition, carbonated and non-carbonated soft drinks. Frozen ready to drink beverages, flavored waters, enhanced waters, fruit juice drinks, fruit juice flavored drinks, sport drinks.

According to another preferred embodiment of the present invention the herbal distillates (Arqiat) is the basic ingredients, in the beverage disclosed, typically being the primary liquid portion in which the remaining ingredients are extracted/dissolved. Purified water is used in the manufacture of certain embodiments of the beverage disclosed here, and water of standard beverage quality can be used in order not to adversely affect beverage taste, odor or appearance.

According to another preferred embodiment of the present invention the water is treated by methods include deionization distillation, filtration and reverse osmosis which would be understood in this disclosure as synonymous.

According to another preferred embodiment of the present invention there are various sweeteners are included in the beverage. The sweeteners are edible consumables suitable for consumption and for use in beverages. These can be "nutritive or non-nutritive", depending on the particular embodiment. The term nutritive sweetener refers generally to sweetener which provides significant caloric content in typical usage amounts.

A "potent sweetener" means a sweetener which is at least twice as sweet as sugar. Potent sweetener includes both nutritive and non-nutritive sweeteners. A 'Non-nutritive sweetener" is one which does not provide significant caloric content in typical usage amounts.

The perception of flavoring agent and sweetening agent may depend on the interrelation of the elements. When a large amount of flavoring agent is used, a small amount of a sweetening agent may be readily perceptible and vice versa.

According to another preferred embodiment of the present invention a sweetener can be a natural potent sweetener, a natural non-nutritive sweetener comprising rebaudioside A, steviocides and optionally one or more other non-nutritive sweeteners. The natural sweetener comprises, cane sugar, Beet sugar, sucrose, liquid sucrose, glucose, liquid glucose, liquid fructose, maltose, xylose, maple syrup, dextrose, high fructose corn syrup, honey, rhamnose, tagatose, trehalose, corn syrup, fruct-oligosccharides and Lo Han Guo juice concentrate or a combination of any of them

According to another preferred embodiment of the present invention the particular acid or acids used will depend, in part on the other ingredients, the desired shelf life of the product, as well as effects on the beverage pH, irritable acidity and taste. Exemplary acids found to be suitable for use in some or all embodiments of the disclosed invention include Lactic acid and its salts, with any or more of, citric, tartaric, malic, adipic, ascorbic, fumaric, gluconic, succinic, sorbic, maleic acids and their salts and mixture of any of them. An acidulant comprising a mixture of natural citric, tartaric, and lactic acids is found to impart certain exemplary embodiments of natural cola formulations with a taste matching with conventional cola beverage acidified with phosphoric acid. The particular acid chosen and the amount will depend, in part, on other ingredients, the desired shelf life of the beverage product, as well as effects on the beverage pH, titratable acidity and taste.

In certain exemplary embodiments the acidulant includes at least or only citric acid anhydrous, tartaric acid and lactic acid and, in any event, contains no phosphoric acid.

Cola beverages typically exhibit a dark brown color derived from caramel. Caramel is the dark brown color material resulting from carefully controlled heat treatment of the food grade carbohydrates, and therefore is known as "burnt sugar color". There are four classes of Caramel. A natural color comprising caramel and another ingredient like apple is also disclosed for a good natural color. All four classes of caramel can be used for this beverage but Caramel class III is disclosed for this particular formulation.

Flavorings suitable for use in certain embodiments of the beverage disclosed can include e.g. spice flavoring, such as cassia, clove, cinnamon, pepper, ginger, vanilla spice flavorings, cardamom, coriander, cumin, ajowan, ginseng and others. Flavorings can be in the form of extract, oleoresin, bottler's base or other forms. A flavoring emulsion can be prepared by mixing some or all of the flavorings together. It is also disclosed for this inventions that fruit flavors, botanical flavors, other flavors and mixture thereof can also be used. Exemplary fruit flavors include the citrus flavors and such flavors as apple, grape, grape, cherry and pineapple flavors and the like, and mixture thereof. Botanical flavors which include essential oils and extracts of nuts, roots and leaves. Example includes cola flavor, tea flavors and the like and mixture thereof. The particular amount of flavor used will depend on the flavor desired and the form of flavor component.

According to another preferred embodiment of the present invention the carbon dioxide is used to provide effervescence to cola beverages. Any of the known technique can be used for this purpose. It can enhance the beverage taste and appearance and can aid in safe guarding the beverage purity.

According to another preferred embodiment of the present invention the preservatives can be used in amounts not exceeding maximum levels under applicable laws and regulations Level of preservatives is adjusted according to the planned final pH of the product as well as on the microbiological spoilage potential of the product. These can be added to the beverage at any suitable time during production. Preservatives can include cinamic acid, sorbates, e.g., sodium, calcium, and potassium sorbate, benzoate, citrates, e.g., sodium citrate and potassium citrate, sodium formate, calcium formate, sodium hexametaphosphate and Hexamethylene tetramine.

Cola beverage disclosed may contain other additional ingredients including, generally, any of those typically found in beverage. These additional ingredients include, but are not limited to, antifoaming agents, gums, emulsifiers, minerals and non- minerals nutritional supplements. Examples of non-nutritional supplement ingredients are known and include, for example, antioxidants and vitamins, including Vitamin A, D, E, C, B, B2, B6, B12 and K, niacin, folic acid, biotin and combinations thereof. The optional non-mineral nutritional supplements are typically present in amounts generally accepted under good manufacturing practices.

According to another preferred embodiment of the present invention the natural beverage prepared by dissolving the sugar in herbal distillates (Arqiat) extract with acidity regulator and preservative; heating and stirring the mixture to dissolve all the ingredients until the temperature reaches in range of 70 °C to 75 °C; stop stirring when the temperature reaches in range of 70 °C to 75 °C.; transfer the syrup into the cooking pans and cooked it at boiling to adjust the Bricks. Stop heating when boil and add sweetener and color in the syrup followed by filtering and cooling the syrup. Dilute the unflavored syrup with treated water to make the finish syrup up to volume and add flavor and stabilizer in the prepared syrup and testing the resultant beverage for pH, Brix and acidity tests, and filling the prepared beverage into the final container through carbo cooler.

According to another preferred embodiment of the present invention the mixing of water with other ingredients, all or some of which are pre-mixed in any combination where the other ingredients include sweetener, an acidulant, a colorant, a preservative and flavor with no phosphoric acid and caffeine.

### EXAMPLE

The beverage of present invention comprising a herbal distillates (Arqiat) extract comprising natural herbs like rose, sandal, khas and ushna 677 L, sweetener (cane sugar 1354 kg, and liquid glucose 30 kg), acidity regulator (citric acid (monohydrate) 13.80 kg, and sodium citrate 2.25 kg), flavor (Natural Identical Flavor 2.1 L), preservatives (potassium sorbate1.68 kg, sodium benzoate 2.25 kg), sweetener (liquid glucose 30 kg), Color (Allura red 748 gms), stabilizer (EDTA-Calcium 378 gms), wherein the beverage comprises no caffeine and no phosphoric acid. The beverage prepared by dissolving the sugar (cane sugar 1354 kg) in herbal distillates (Arqiat) extract with acidity regulator (citric acid (monohydrate) 13.80 kg, and sodium citrate 2.25 kg) and preservative; heating and stirring the mixture to dissolve all the ingredients until the temperature reaches in range of 70 °C to 75 °C.; stop stirring when the temperature reaches in range of 70 °C to 75 °C. Transfer the syrup into the cooking pans and cooked it at boiling to adjust the Bricks. After cooking, stop heating and add sweetener (liquid glucose 30 kg) and color (Allura red 748 gm) in the syrup. Filter and cool the syrup. Dilute the unflavored syrup with treated water to make the finish syrup up to volume. Add flavor (Natural Identical Flavor 2.1 L) and stabilizer (EDTA-Calcium 378 gm) in the prepared syrup. Check the pH, Brix and acidity of the prepared mother syrup and fill the prepared beverage into the final container through carbo cooler.

Given the above disclosure and description of exemplary embodiments, it will be apparent to those skilled in the art that numerous alternative and different embodiments are possible in keeping with the general principles of the invention disclosed here. Those skilled in this art will recognize that all such various modifications and alternative embodiments are within the true scope and spirit of the invention. The appended claims are intended to cover all such modifications and alternative embodiments. It should be understood that the use of a singular indefinite or definite article (e.g., "a," "an," "the etc.) in this disclosure and in the following claims follows the traditional approach in patents of meaning "at least one' unless in a particular instance it is clear from context that the term is intended in that particular instance to mean specifically one and only one. Likewise, the term "comprising is open ended, not excluding additional items, features, components, etc.

## Claims

1. A herbal beverage composition comprising:
- a herbal distillates (Arqiat) extract,
- water,
- at least one acidulant,
- a sweetener,
- a colorant,
- a preservative,
- a stabilizer, and
- a flavor,
wherein the beverage is free from caffeine and phosphoric acid.

2. The herbal beverage of claim 1, wherein the herbal distillates (Arqiat) extract is comprised of rose, sandal, khas and ushna plants and herbs.

3. The herbal beverage of claim 2, wherein the herbal distillates (Arqiat) extract is form any part of the plants and herbs of rose, sandal, khas and ushna.

4. The herbal beverage of claim 1, wherein the acidulant comprises at least one of citric acid (monohydrate) and sodium citrate.

5. The herbal beverage of claim 1, wherein the sweetener is a cane sugar.

6. The herbal beverage of claim 1, wherein the sweetener is a liquid glucose.

7. The herbal beverage of claim 1, wherein the preservatives comprises at least one of potassium sorbate and sodium benzoate.

8. The herbal beverage of claim 1, wherein the color is allura red

9. The herbal beverage of claim 1, wherein the stabilizer is an EDTA-calcium.

10. The herbal beverage of claim 1, wherein the flavor is natural identical flavor.

11. The herbal beverage of claim 1, wherein the water is treated either by reverse osmosis, distilled or filtered water.

12. A method of manufacturing the herbal beverage comprising the steps of:
- dissolving the sugar in herbal distillates (Arqiat) extract with acidity regulator and preservative,
- heating and stirring the mixture to dissolve all the ingredients until the temperature reaches in range of 70 °C to 75 °C,
- stop stirring when the temperature reaches in range of 70 °C to 75 °C,
- transferring the syrup into the cooking pans and cooked till reach to boiling point to adjust the Bricks,
- stop heating when boil and add sweetener and color in the syrup,
- filtering and cooling the syrup,
- diluting the unflavored syrup with treated water to make the finish syrup up to volume.
- adding flavor and stabilizing in the prepared syrup, and
- checking the pH, Brix and acidity of the prepared mother syrup and filling the prepared beverage into the final container through carbo cooler.
